# EUROPÄISCHE PATENTSCHRIFT

(11) **EP 0 799 154 B1**
(45) Veröffentlichungstag und Bekanntmachung des Hinweises auf die Patenterteilung: **28.07.1999**
(21) Anmeldenummer: 95942118.1
(22) Anmeldetag: 12.12.1995
(51) Int. Cl.: C01B 15/10, C11D 3/39

(54) **VERFAHREN ZUR HERSTELLUNG EINES NATRIUMPERCARBONAT-PRODUKTES**
PROCESS FOR PREPARING A SODIUM PERCARBONATE PRODUCT
PROCEDE DE PREPARATION D'UN PRODUIT DE PERCARBONATE DE SODIUM

(30) Priorität: 22.12.1994 DE 4446014
(43) Veröffentlichungstag der Anmeldung: 08.10.1997
(73) Patentinhaber: Solvay Interox GmbH, 30173 Hannover (DE)
(72) Erfinder: FUCHS, Paul-Wilhelm, DECEASED (DE); HONIG, Helmut, D-82538 Geretsried (DE); MATHES, Manfred, D-53557 Bad Hönningen (DE); BECK, Harald, D-56593 Epgert-Krunkel (DE)
(74) Vertreter: Gosmann, Martin
(86) Internationale Anmeldenummer: EP9504891
(87) Internationale Veröffentlichungsnummer: WO9619408

(56) Entgegenhaltungen:
- DE-A- 732 501
- CHEMICAL ABSTRACTS, vol. 70, no. 10, 10.März 1969 Columbus, Ohio, US; abstract no. 43483, T. P. FIRSOVA ET AL. 'Reaction of sodium bicarbonate with hydrogen peroxide and some properties of Na2CO3.1.5H2O2' Seite 509; & Chemisches Zentralblatt, 1969, Nr. 32-0711 & SER. KHIM., Bd. 9, 1968 USSR, Seiten 1941-1944,
- PHARMAZIE, Bd. 25, Nr. 7, 1970 BERLIN DE, Seiten 433-434, A. KRAUSE, T. WEIMANN 'Über die Bildung von Peroxycarbonat aus Natriumhydrogencarbonat in verdünnten Wasserstoffperoxidlösungen'
- DATABASE WPI Week 7108 Derwent Publications Ltd., London, GB; AN 71-14998 & JP,A,46 007 371 (NIPPON PEROXIDE CO. LTD.)
- PATENT ABSTRACTS OF JAPAN vol. 015 no. 072 (C-0808) ,20.Februar 1991 & JP,A,02 296705 (MITSUBISHI GAS CHEM CO INC) 7.Dezember 1990,

## Beschreibung

Die Erfindung bezieht sich auf ein Verfahren zur Herstellung eines neuartigen Natriumpercarbonat-Produktes, welches sich als aktivsauerstoffhaltige Verbindung in pH-regulierten Wasch- und Reinigungsmittelsystemen, insbesondere im schwachalkalischen pH-Bereich einsetzen läßt.

Es ist bekannt, Peroxoverbindungen in pulverförmigen Waschmittelmischungen als bleichende Verbindungen einzusetzen. In den üblichen Haushaltsvollwaschmitteln verwendet man üblicherweise Natriumperborat-Tetrahydrat oder Natriumperborat-Monohydrat als Bleichmittel, da diese Materialien in reinem Waschmittelmedium relativ beständig gegen Zersetzung sind. Immer häufiger wird jedoch auch auf andere Alkalimetallperoxosalze, insbesondere Peroxocarbonate, wie Natriumpercarbonat (PCS) zurückgegriffen. Üblicherweise wird PCS z.B. aus Lösungen hergestellt (Naßprozeß); hierbei ist zu berücksichtigen, daß nicht eine wohldefinierte, homogene Verbindung, sondern ein Gemisch von teilweise Hydratwasser-haltigen Verbindungen mit u.a. folgenden Formeln entsteht:

Na₂CO₃·1,5 H₂O₂

Na₂CO₃· 1,5 H₂O₂·H₂O

Na₂CO₃·2 H₂O₂·H₂O

Na₂CO₃·2 H₂O₂

Na₂CO₃·x H₂O₂.

Übliche Handelsware hat die durchschnittliche Zusammensetzung 2 Na₂CO₃·3 H₂O₂; aus chemischer Sicht ist PCS daher genauer als Natriumcarbonat-Peroxohydrat zu bezeichnen.

Der Einsatz von Peroxocarbonat (PCS) in Wasch- und Reinigungsmittelsystemen weist aus anwendungstechnischer Sicht jedoch immer noch einige Probleme auf. Beispielsweise wurde festgestellt, daß der Einsatz von Peroxocarbonat bei gleichzeitiger Verwendung von Bleichmittelaktivatoren, beispielsweise TAED (Tetraacethylethylendiamin) bei hohen pH-Werten von etwa 11 in bestimmten Waschmittelsystemen keine optimale Bleichwirkung entfaltet, wie diese andererseits bei niedrigeren pH-Werten von bspw. 8 bis 9 gefunden werden.

Aus Chemical Abstracts, Vol. 70, no. 10 (10 März 1969), no. 43483 und aus Chemisches Zentralblatt, 1969, Nr. 32 - 0711 ist es bekannt, Natriumhydrogencarbonat unter Einwirkung von 40 bis 60 gew.-%igem Wasserstoffperoxid bei Temperaturen von -10 °C in ein Gemisch aus etwa 49 Gew.-% NaHCO₄·H₂O, etwa 30 Gew.-% NaHCO₃, etwa 17 Gew.-% Natriumpercarbonat und etwa 3,5 Gew.-% Wasser zu überführen. Bei höheren Temperaturen von etwa 0 °C wird gemäß den vorstehenden Literaturstellen keine Mischverbindung mehr erhalten, sondern nur Natriumpercarbonat. Eine Natriumpercarbonat/Natriumbicarbonat-Mischverbindung, die sich für den Einsatz in pH-regulierten Waschmittelzusammensetzungen eignet, wird in den Literaturstellen dagegen nicht beschrieben.

Es besteht daher ein Bedarf an einem Natriumpercarbonathaltigen Produkt, das eine geringere pH-Anfälligkeit in modernen Wasch- und Reinigungsmittelsystemen aufweist und somit eine optimale bleichende Wirkung entfalten kann. Ferner sollte das Produkt einen geeigneten Aktivsauerstoffgehalt und gute Aktivsauerstoff- und Lagerstabiliät, insbesondere auch in Gegenwart von anderen üblichen Wasch- und Reinigungsmittelkomponenten, aufweisen.

Die Aufgabe wird gelöst durch das in den Patentansprüchen angegenbene erfinderische Verfahren, das erfinderische Produkt und dessen erfinderische Verwendung.

Insbesondere betrifft die Erfindung ein Verfahren zur Herstellung einer Natriumpercarbonat/NatriumbicarbonatMischverbindung, welches sich dadurch auszeichnet, daß man Natriumbicarbonat mit einer solchen auf Natriumbicarbonat bezogenen Menge einer wäßrigen Wasserstoffperoxid-Lösung unter Erwärmung auf eine Temperatur von mindestens 50°C umsetzt, daß 40 bis 60 Mol-% des Natriumbicarbonates in Natriumpercarbonat überführt werden und daß man die gebildete Natriumpercarbonat/Natriumbicarbonat-Mischverbindung durch gleichzeitige oder nachfolgende Trocknung gewinnt. Im vorstehenden Verfahren können an sich bekannte Natriumbicarbonat-Produkte synthetischer oder natürlicher Herkunft eingesetzt werden. Natriumbicarbonat mit der Formel NaHCO₃ wird auch als Natriumhydrogencarbonat bezeichnet. Um eine Überführung des Natriumbicarbonates in Natriumpercarbonat zu bewerkstelligen, ist eine leichte Erwärmung erforderlich, da durch Mischen des Natriumbicarbonat-haltigen Eduktes mit der wäßrigen Wasserstoffperoxid-Lösung allein (z.B. bei Raumtemperatur) allenfalls nur eine geringe Reaktion des Eduktes zu Natriumpercarbonat beobachtet wird. Das Gemisch wird daher unter Erwärmung auf eine Temperatur von etwa mindestens 50 °C umgesetzt. Hierbei entsteht eine echte Mischung aus Natriumpercarbonat und Natriumbicarbonat, die im wesentlichen keine anderen Reaktionsprodukte enthält; beispielsweise wird in vorstehenden Umsetzungsprodukten lediglich ein Sodagehalt von maximal etwa 1 Gew.-% gefunden. Die als weiteres Reationsprodukt entstehende Kohlensäure (H₂CO₃) wird während der Umsetzung oder bei der Trocknung als gasförmiges Produkt, insbesondere als CO₂ und Wasser, entfernt. Die als weiteres Edukt eingesetzte wäßrige Wasserstoffperoxid-Lösung kann an sich jede beliebige technische Wasserstoffperoxid-Lösung mit an sich üblichen Wasserstoffperoxidgehalten sein. Beispielsweise können 35 bis 85 Gew.-%ige Wasserstoffperoxid-Lösungen eingesetzt werden, die auch großtechnisch in diesem Konzentrationsvereich verfügbar sind. Die Wasserstoffperoxid-Lösung kann durch übliche Stabilisatoren gegen Aktivsauerstoffverlust stabilisiert sein.

Durch die Erwärmung wird nicht nur die Umsetzung der Edukte gestartet, sondern die jeweils für die Umsetzung und/oder Trocknung gewählte Temperatur beeinflußt auch den Aktivsauerstoffgehalt sowie die Korngröße des gewonnenen partikelförmigen Produktes. Im allgemeinen wird eine Kornvergröberung gegenüber dem eingesetzten Natriumbicarbonat-Edukt beobachtet.

Zwar reicht eine Erwärmung auf etwa mindestens 50°C zur Umsetzung bereits aus, jedoch wird die Umsetzung bzw. auch die Trocknung im allgemeinen bei Temperaturen von 50 bis 140 °C, vorzugsweise bei 80 bis 120 °C durchgeführt. Die stöchimetrische (auf Natriumbicarbonat bezogene) Menge des Wasserstoffperoxids wird erfindungsgemäß so gewählt, daß bei der Umsetzung nur ein Teil von 40 bis 60 Mol-% des Natriumbicarbonates in Natriumpercarbonat überführt wird. Die Menge des verbleibenden Natriumbicarbonatanteiles im Natriumpercarbonat/Natriumbicarbonat-Produkt wird der Fachmann in Anpassung an die jeweiligen pH-regulierten Wasch- und Reinigungsmittelsysteme im Rahmen dieser Umsetzungsgrade von 40 bis 60 Mol-% wählen. Mit diesen Umsetzungsgraden werden Aktivsauerstoffgehalte im Natriumpercarbonat/Natriumbicarbonat-Mischprodukt erzielt, die eine gute Stabilität und bleichende Wirkung in den Wasch- und Reinigungsmitteln entfalten und zudem günstige anwendungstechnische pH-Eigenschaften gewährleisten.

Das erfindungsgemäß umzusetzende Gemisch aus dem Natriumpercarbonat-Edukt und der wäßrigen Wasserstoffperoxid-Lösung kann üblicherweise vor oder während der Umsetzung noch mit zusätzlichen Aktivsauerstoff-Stabilisatoren versetzt werden. Bevorzugte Stabilisatoren sind insbesondere organische Phosphonat-Stabilisatoren. Als Stabilisatoren können z.B. im Verfahren, separat oder über das Wasserstoffperoxid, zugesetzt werden: insbesondere Alkalimetall- oder Magnesiumsilikate, Magnesiumsulfat, Phosphate (z.B. Metaphosphat), organische Stabilisatoren wie Chinolinsäure, Salicylsäure oder Dipicolinsäure (DPA), Chelatbildner wie 8-Oxychinolin oder Ethylendiamintetraessigsäure (EDTA), Phosphonsäurederivate wie z.B. Methylen- oder Aminomethylenphosphonsäuren oder deren Salze, insbesondere 1-Hydroxyethylidendiphosphonsäure (HEDP), sowie auch geringe Mengen üblicher Netzmittel. In einem Ausführungsbeispiel der Erfindung wird z.B. HEDP (z,B. als 60 Gew.-% wäßrige Lösung) verwendet. Es können auch Salze, z.B. Alkalimetallsalze, dieser organischen Phosphonsäure als Stabilisator verwendet werden.

Das erfindungsgemäße Verfahren kann einerseits in zwei Schritten, d.h. in einem Umsetzungsschritt und einem getrennten, nachfolgenden Trocknungsschritt, durchgeführt werden. Zweckmäßigerweise kann man andererseits aber nach Herstellung des Gemisches aus Natriumbicarbonat-Edukt und der wäßrigen wasserstoffperoxid-Lösung die Umsetzung und die Trocknung gleichzeitig bewerkstelligen. Hierfür sind an sich übliche Trocknungseinrichtungen geeignet. Beispielsweise kann die Umsetzung und auch die Trocknung in einem Umlufttrockner oder auch in einem Wirbelbetttrockner durchgeführt werden. Die vorhergehende Herstellung des umzusetzenden Gemisches aus Natriumbicarbonat-haltigem Edukt und der wäßrigen Wasserstoffperoxid-Lösung kann in an sich üblicher Weise durchgefüllrt werden, wobei an sich übliche Mischer eingesetzt werden können; besonders günstig erweisen sich Intensivmischer, beispielsweise Intensivmischer vom Lödige-Typ.

Nach dem vorstehenden Verfahren werden günstige Natriumpercarbonat/Natriumbicarbonat-Mischverbindungen erhalten, die sich durch günstige anwendungstechnische Eigenschaften in pH-regulierten Wasch- und Reinigungsmittelsystemen auszeichnen. Diese Produkte, die nach dem erfindungsgemäßen Verfahren erhältlich sind, stellen ebenfalls einen Gegenstand der Erfindung dar, ebenso wie die Verwendung dieser Natriumpercarbonat/Natriumbicarbonat-Mischverbindungen in Wasch- und Reinigungsmitteln. Die nach dem erfindungsgemäßen Verfahren erhaltenene Natriumpercarbonat/Natriumbicarbonat-Mischverbindungen sind bei entsprechender Auswahl der Edukt-Korngröße von der Korngröße bereits direkt für die Wasch- und Reinigungsmittel geeignet oder sie können gewünschtenfalls auch zur Einstellung einer geforderten Korngrößenverteilung durch Siebung an die Korngrößenverteilung anderer Wasch- und Reinigungsmittelbestandteile angepaßt werden. Gewünschtenfalls kann das partikelförmige Produkt noch in an sich üblicher Weise mit einem Coating für Peroxoverbindungen versehen werden.

Das nachfolgende Beispiel soll die Erfindung näher erläutern, ohne sie jedoch in ihrem Umfang zu beschränken.

### Beispiel

In einen Intensivmischer vom Lödige-Typ wurden 2 kg Natriumbicarbonat mit einer Kornfraktion von 0,2 bis 1,0 mm vorgelegt und innerhalb von 2 Minuten bei 60 °C eine Menge von 415 g Wasserstoffperoxid (wäßrig, 70 Gew.-%, mit 9,5 ml Turpinal SL versetzt) zugesetzt. Die Mischung wurde anschließend noch 4 Minuten intensiv weitergemischt. Danach wurde das Reaktionsgemisch in einen Wirbelbetttrockner überführt und bei einer Zulufttemperatur von 85 °C und einer Ablufttemperatur von 70 °C getrocknet.

Man erhielt ein körniges Produkt mit einer Korngröße zwischen 0,15 und 1,4 mm; die Wasserstoffperoxid-Ausbeute betrug 90 %. Die Analyse des Endproduktes zeigt, daß das Produkt im wesentlichen nur aus Natriumbicarbonat und Natriumpercarbonat bestand (Soda-Gehalt.< 1%). Der Aktivsauerstoffgehalt des Produktes betrug 6,7 %.
Turpinal SL = wäßrige 60 gew.-%ige Lösung von 1-Hydroxyethylidendiphosphonsäure (HEDP)

## Patentansprüche

1. Verfahren zur Herstellung einer Natriumpercarbonat/Natriumbicarbonat-Mischverbindung, dadurch gekennzeichnet, daß man Natriumbicarbonat mit einer solchen auf Natriumbicarbonat bezogenen Menge einer wäßrigen Wasserstoffperoxid-Lösung unter Erwärmung auf eine Temperatur von mindestens 50°C umsetzt, daß 40 bis 60 Mol-% des Natriumbicarbonates in Natriumpercarbonat überführt werden und daß man die gebildeten Natriumpercarbonat/Natriumbicarbonat-Mischverbindung durch gleichzeitige oder nachfolgende Trocknung gewinnt.

2. Verfahren nach Anspruch 1, dadurch gekennzeichnet, daß man das Gemisch bei einer Temperatur von 50°C bis 140°C, vorzugsweise bei einer Temperatur von 80°C bis 120°C umsetzt.

3. Verfahren nach Anspruch 1, dadurch gekennzeichnet, daß man die Umsetzung des Gemisches aus Natriumbicarbonat und wäßriger Wasserstoffperoxid-Lösung und die Trocknung gleichzeitig in einem Verfahrensschritt, vorzugsweise in einem Wirbelbetttrockner, durchführt.

4. Verfahren nach Anspruch 1, dadurch gekennzeichnet, daß man dem Gemisch aus Natriumbicarbonat und wäßriger Wasserstoffperoxid-Lösung vor oder während der Umsetzung einen Stabilisator für Aktivsauerstoff-Verbindungen, vorzugsweise einen organischen Phosphonsäure-Stabilisator, zusetzt.

5. Natriumpercarbonat/Natriumbicarbonat-Mischerverbindung, erhältlich nach dem Verfahren gemäß einem der Ansprüche 1 bis 4.

6. Verwendung einer Natriumpercarbonat/Natriumbicarbonat-Mischverbindung gemäß Anspruch 5 in pH-regulierten Wasch- und Reinigungsmitteln.

## Revendications

1. Procédé pour la préparation d'un composé mixte de percarbonate de sodium/bicarbonate de sodium, caractérisé en ce qu'on fait réagir du bicarbonate de sodium avec une quantité d'une solution aqueuse de peroxyde d'hydrogène rapportée au bicarbonate de sodium, tout en réchauffant à une température d'au moins 50°C, ladite quantité étant telle que le bicarbonate de sodium se transforme en percarbonate de sodium à concurrence de 40 à 60 moles %, et en ce qu'on obtient le composé mixte de percarbonate de sodium/bicarbonate de sodium à l'état de produit par séchage simultané ou ultérieur.

2. Procédé selon la revendication 1, caractérisé en ce qu'on fait réagir le mélange à une température de 50°C à 140°C, de préférence à une température de 80°C à 120°C.

3. Procédé selon la revendication 1, caractérisé en ce qu'on effectue la mise en réaction du mélange du bicarbonate de sodium et de la solution aqueuse de peroxyde d'hydrogène, ainsi que le séchage simultanément en une seule étape opératoire, de préférence dans un dessiccateur à lit fluidisé.

4. Procédé selon la revendication 1, caractérisé en ce qu'on ajoute au mélange du bicarbonate de sodium et de la solution aqueuse de peroxyde d'hydrogène, avant ou pendant la mise en réaction, un stabilisateur pour les composés contenant des atomes d'oxygène actifs, de préférence un acide phosphonique organique à titre de stabilisateur.

5. Composé mixte de percarbonate de sodium/bicarbonate de sodium que l'on obtient conformément au procédé selon l'une quelconque des revendications 1 à 4.

6. Utilisation d'un composé mixte de percarbonate de sodium/bicarbonate de sodium selon la revendication 5 dans des produits de lavage et dans des détergents dont le pH a été réglé.

## Claims

1. Process for the preparation of a sodium percarbonate/sodium bicarbonate mixed compound, characterized in that sodium bicarbonate is reacted, with heating to a temperature of at least 50°C, with an amount, based on sodium bicarbonate, of an aqueous hydrogen peroxide solution such that from 40 to 60 mol% of the sodium bicarbonate are converted into sodium percarbonate and that the sodium percarbonate/sodium bicarbonate mixed compound formed is obtained by simultaneous or subsequent drying.

2. Process according to Claim 1, characterized in that the mixture is reacted at a temperature of from 50°C to 140°C, preferably at a temperature of from 80°C to 120°C.

3. Process according to Claim 1, characterized in that the reaction of the mixture of sodium bicarbonate and aqueous hydrogen peroxide solution and the drying are carried out simultaneously in one process step, preferably in a fluidized-bed drier.

4. Process according to Claim 1, characterized in that a stabilizer for active-oxygen compounds, preferably an organic phosphonic acid stabilizer, is added to the mixture of sodium bicarbonate and aqueous hydrogen peroxide solution before or during the reaction.

5. Mixed sodium percarbonate/sodium bicarbonate compound obtainable by the process according to one of Claims 1 to 4.

6. Use of a mixed sodium percarbonate/sodium bicarbonate compound according to Claim 5 in pH-regulated detergents and cleaning compositions.
